# EUROPEAN PATENT SPECIFICATION

(11) **EP 2 594 472 B1**
(45) Date of publication and mention of the grant of the patent: **07.01.2015**
(21) Application number: 11189810.2
(22) Date of filing: 18.11.2011
(51) Int. Cl.: B62M 9/10

(54) **Ratchet structure of a freewheel and a hub**
Ratschenstruktur für einen Freilauf und Nabe
Structure de cliquet d'une roue libre et moyeu

(43) Date of publication of application: 22.05.2013
(73) Proprietor: Lin, Chang Hui, Changhu (TW)
(72) Inventor: Lin, Chang Hui, Changhu (TW)
(74) Representative: Chaillot, Geneviève

(56) References cited:
- GB-A- 2 289 507
- US-A- 6 039 665

## Description

### BACKGROUND OF THE INVENTION

### Field of the Invention

The present invention relates to a structure of a freewheel and a hub that when a chain of a bicycle is actuated, a band angle will not generate among the chainwheel disks, the first chainwheel disc assembly, and the second chainwheel disc assembly, thus changing a speed of the freewheel set smoothly.

### Description of the Prior Art

A conventional structure of a hub and a ratchet includes a plurality of chainwheel disks piled together, and between each two chainwheel disks is defined a pad so as to space the two chainwheel disks apart from each other, the chainwheel disk is connected with the ratchet of the hub, such that a freewheel set rotates to actuate the ratchet and the hub, hence a bicycle is actuated.

A freewheel set made up of a plurality of combined chainwheels which are fastened together is known from GB 2289507.

However, when a single chainwheel disk of the freewheel set is connected with the ratchet, a first ratchet and notches of the single chainwheel disk have to contact with a second ratchet and first teeth, having a time consuming production. In addition, as the single chainwheel disk is fixed on the ratchet, a contacting area of the groove and ratchet is small, causing a band angle to change a speed of the freewheel set unstably.

The present invention has arisen to mitigate and/or obviate the afore-described disadvantages.

### SUMMARY OF THE INVENTION

The primary object of the present invention is to provide a structure of a freewheel and a hub that is capable of being simplified to lower production time and securing the freewheel assembly.

Another object of the present invention is to provide a structure of a freewheel and a hub that when a chain of a bicycle is actuated, a band angle will not generate among the chainwheel disks, the first chainwheel disc assembly, and the second chainwheel disc assembly, thus changing a speed of the freewheel set smoothly.

To obtain the above objectives, a structure of a freewheel and a hub is provided according to claim 1.

### BRIEF DESCRIPTION OF THE DRAWINGS

Fig. 1 is a perspective view showing the exploded components of a structure of a freewheel and a hub according to a preferred embodiment of the present invention;
Fig. 2 is another perspective view showing the exploded components of the structure of the freewheel and the hub according to the preferred embodiment of the present invention;
Fig. 3 is a perspective view showing the assembly of the structure of the freewheel and the hub according to the preferred embodiment of the present invention;
Fig. 4 is a cross sectional view showing the exploded components of the structure of the freewheel and the hub according to the preferred embodiment of the present invention;
Fig. 5 is a cross sectional view showing the assembly of the structure of the freewheel and the hub according to the preferred embodiment of the present invention.

### DETAILED DESCRIPTION OF THE PREFERRED EMBODIMENTS

The present invention will be clearer from the following description when viewed together with the accompanying drawings, which show, for purpose of illustrations only, the preferred embodiment in accordance with the present invention.

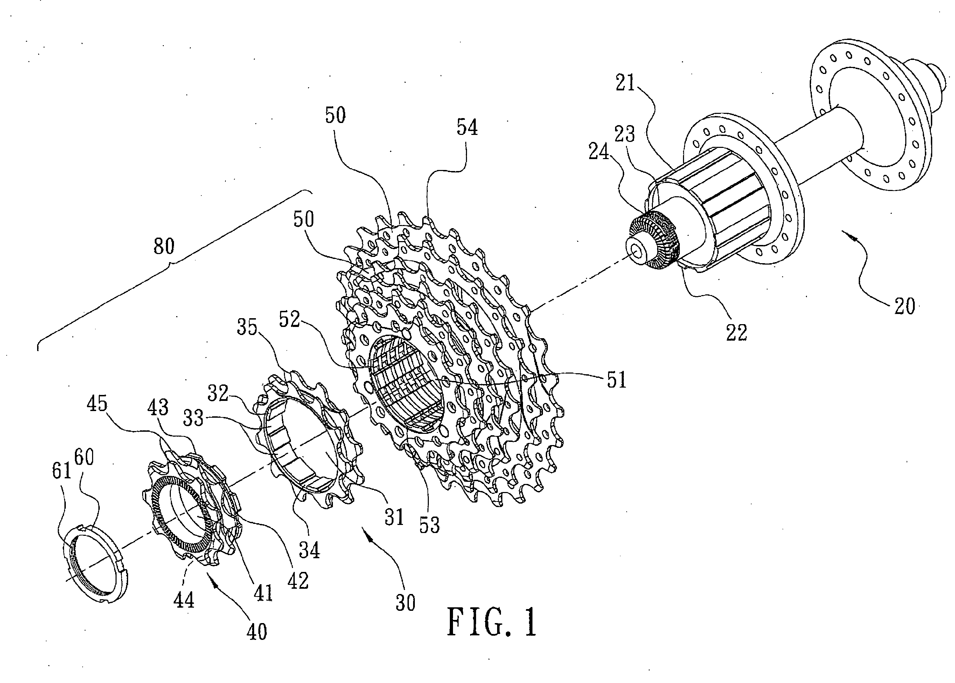

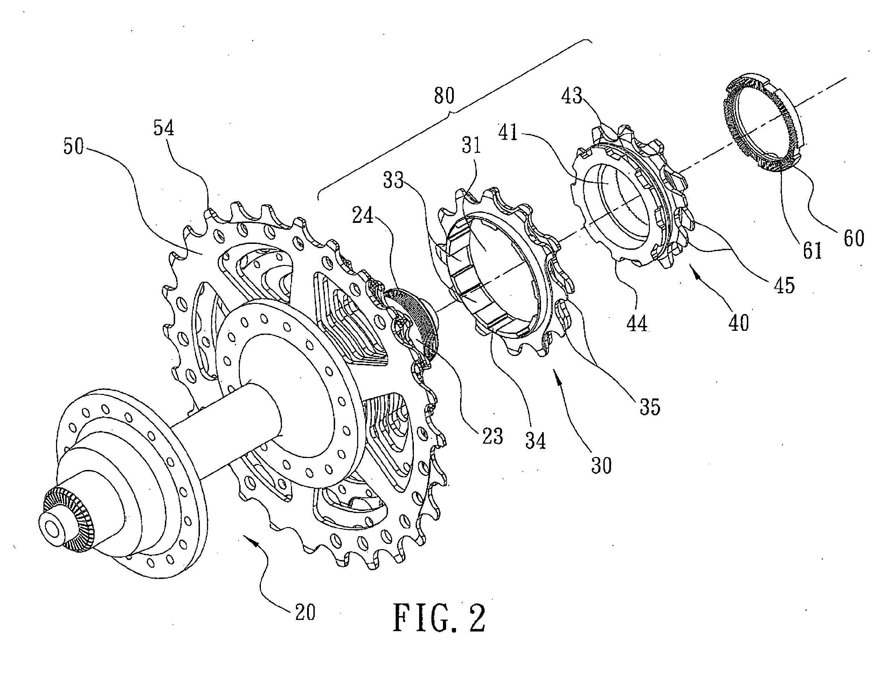

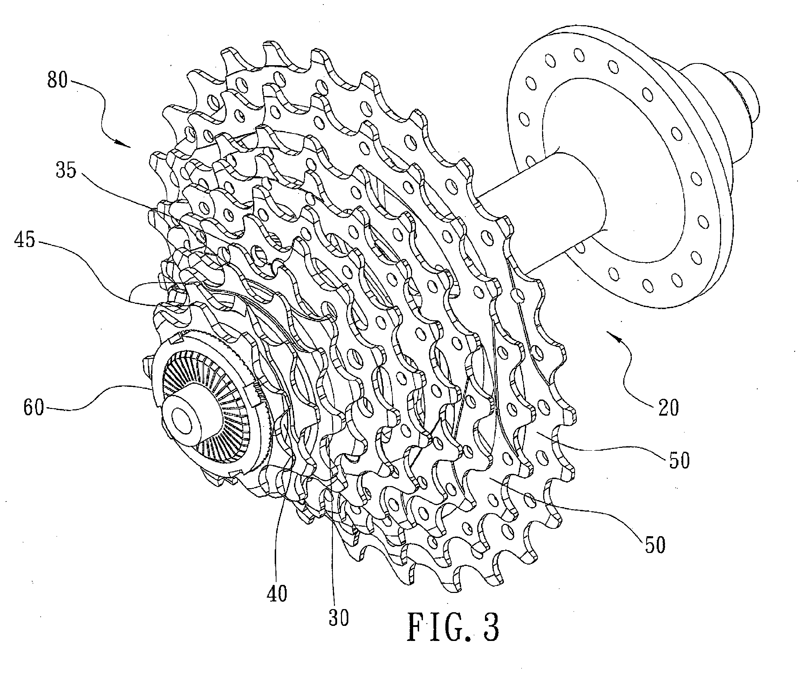

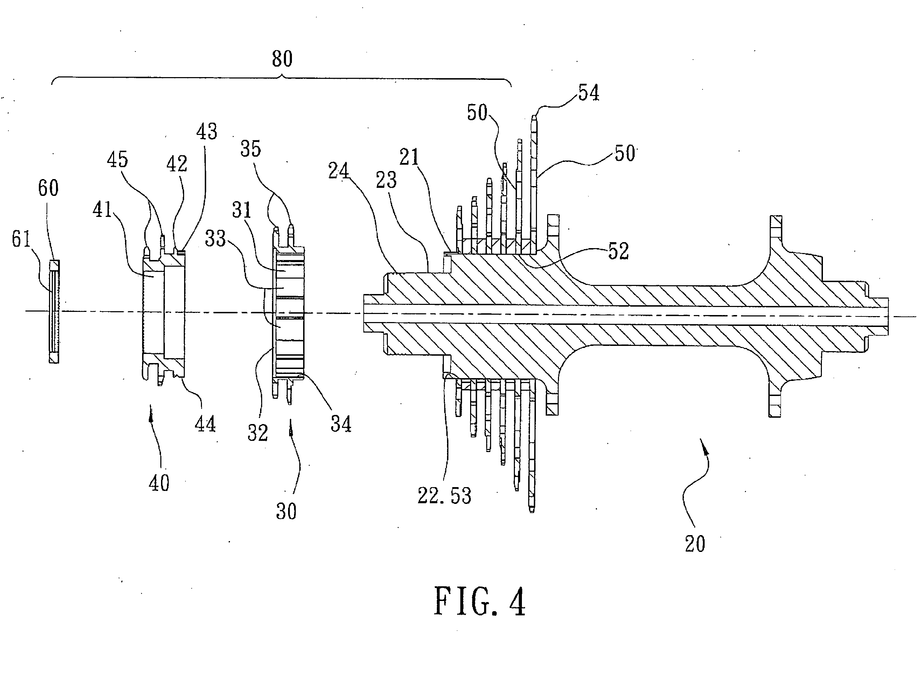

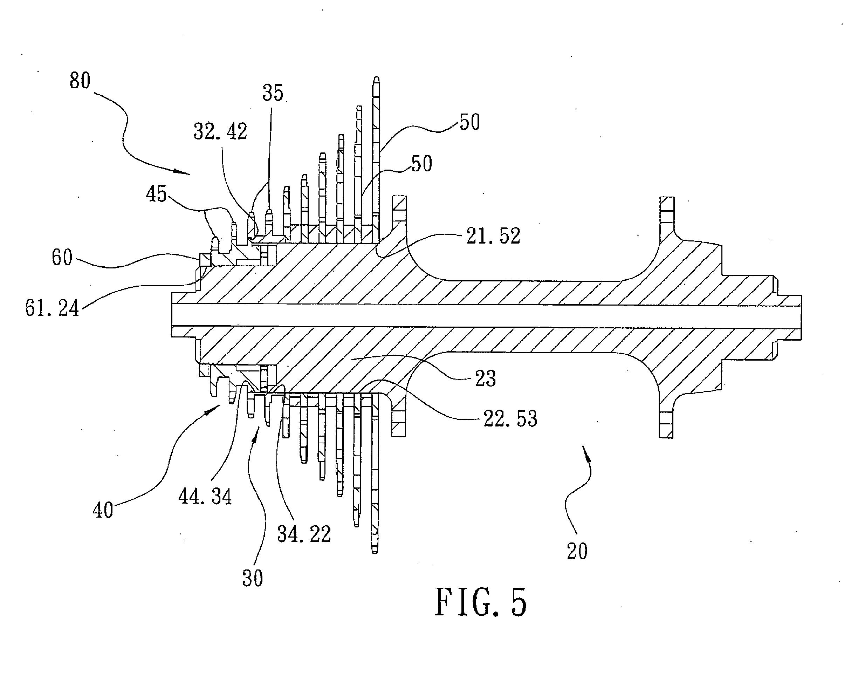

Referring to Figs. 1-5, a structure of a freewheel and a hub in accordance with a preferred embodiment of the present invention comprises:
a hub 20 including a first ratchet 21 having a pair of first teeth 22, a central shaft 23, a screw section 24, and a freewheel set 80;
the hub 20 including a first chainwheel disc assembly 30, a second chainwheel disc assembly 40, a plurality of chainwheel disks 50, and a screw 60;
each chainwheel disk 50 including a through hole 51, a first groove 52, and a second groove 53, a first single sprocket 54 disposed on an outer periphery thereof;
the first chainwheel disc assembly 30 includes an aperture 31 fixed on a central position thereof, a recessed rim 32 formed on an inner side thereof, a recess 33 arranged on a rear side of the recessed rim 32, a pair of notches 34, and a first double sprocket 35 secured on an outer side thereof.

In assembly, the recess 33 is retained in the first groove 52, and the notches 34 are retained with the second groove 53, hence the recess 33 contacts with the first ratchet 21 so that the first ratchet 21 is fixed securely.

The second chainwheel disc assembly 40 includes an opening 41 disposed on a central position thereof, a second single sprocket 45 fixed on an outer side thereof, a raised fringe 42 formed on a front side of the second single sprocket 45, a second ratchet 43 and a pair of tooth 44, both of which are arranged on a front side of the raised fringe 42. In assembly, the raised fringe 42 is retained with the recessed rim 32, the second ratchet 43 and the tooth 44 are retained in the recess 33 and the notches 34 of the first chainwheel disc assembly 30 respectively, the screw 60 includes threads 61 to screw with the screw section 24 so that the freewheel set 80 is retained tightly.

Thereby, when a chain of a bicycle is actuated, a band angle will not generate among the chainwheel disks 50, the first chainwheel disc assembly 30, and the second chainwheel disc assembly 40, thus changing a speed of the freewheel set 80 smoothly.

While we have shown and described various embodiments in accordance with the present invention, it is clear to those skilled in the art that further embodiments may be made without departing from the scope of the present invention.

## Claims

1. A structure of a freewheel and a hub comprising:
a hub (20) including a first ratchet (21) having a pair of first teeth (22), and a central shaft (23) having a screw section (24) at its end region adjacent to the first ratchet (21); and
a freewheel set (80) including a first chainwheel disc assembly (30), a second chainwheel disc assembly (40), a plurality of chainwheel disks (50), and a screw (60);
each chainwheel disk (50) including a through hole (51), a first groove (52) and a second groove (53) disposed on an inner periphery thereof, a first single sprocket (54) disposed on an outer periphery thereof;
the first chainwheel disc assembly (30) includes an inner side defining an aperture (31) in a central position thereof, a recessed rim (32) formed on said inner side, a recess (33) and a pair of notches (34) arranged on a rear side of the recessed rim (32), a pair of notches (34), and a first double sprocket (35) secured on an outer side thereof;
wherein the second chainwheel disc assembly (40) includes an inner side defining an opening (41) disposed in a central position thereof, a second single sprocket (45) fixed on an outer side thereof, a raised fringe (42) formed on a front side of the second single sprocket (45), a second ratchet (43) and a pair of second teeth (44), both of which are arranged on a front side of the raised fringe (42);
wherein, in assembly, the first teeth (22) of the first ratchet (21) are retained with the second groove (53) of each chainwheel disk (50), the first chainwheel disk assembly (30) is positioned in respect to the plurality of chainwheel disks (50) so that the recess (33) is retained with the first groove (52), and the notches (34) are retained with the second groove (53), such that the recess (33) contacts with the first ratchet (21), the first and second chainwheel disk assemblies (30, 40) are positioned in respect to each other so that the raised fringe (42) is retained with the recessed rim (32), the second ratchet (43) and the second teeth (44) are retained in the recess (33) and the notches (34) respectively, and the screw (60) is screwed with the screw section (24), so that the freewheel set (80) is retained tightly.

## Patentansprüche

1. Eine Struktur aus einem Freilauf und einer Radnabe, die folgendes umfasst:
eine Radnabe (20), die folgendes beinhaltet: ein erstes Sperrrad (21) mit einer Reihe von ersten Zähnen (22) und eine zentrale Welle (23), mit einem Schraubabschnitt (24) an seinem Endbereich in der Nähe des ersten Sperrrades (21); und
einen Satz Freilaufräder (80), der folgendes beinhaltet: eine erste Anordnung Kettenradscheiben (30), eine zweite Anordnung Kettenradscheiben (40), eine Mehrzahl von Kettenradscheiben (50) und eine Schraube (60);
jede Kettenradscheibe (50) folgendes beinhaltet: ein durchgehendes Loch (51), eine erste Nut (52) und eine zweite Nut (53), die an einer inneren Peripherie derselben angeordnet ist, ein erstes Einzelritzel (54), das an einer äußeren Peripherie derselben angeordnet ist;
die erste Anordnung Kettenradscheiben (30) folgendes beinhaltet: eine innere Seite, die eine Öffnung (31) in einer zentralen Position derselben definiert, einen abgesetzten Kranz (32), der an der inneren Seite ausgebildet ist, eine Ausnehmung (33) und eine Reihe von Kerben (34), die an einer Rückseite des abgesetzten Kranzes (32) angeordnet sind und ein erstes Doppelritzel (35), das an einer äußeren Seite derselben gesichert ist;
wobei die zweite Anordnung Kettenradscheiben (40) folgendes beinhaltet: eine innere Seite, die eine Öffnung (41), die in einer zentralen Position derselben angeordnet ist, definiert, ein zweites Einzelritzel (45), das an einer äußeren Seite derselben befestigt ist, einen erhöhten Rand (42), der auf einer Vorderseite des zweiten Einzelritzels (45) ausgeformt ist, ein zweites Sperrrad (43) und eine Reihe von zweiten Zähnen (44), die beide an einer Vorderseite des erhöhten Randes angeordnet sind;
wobei in der Anordnung die ersten Zähne (22) des ersten Sperrrades (21) durch die zweite Nut (53) jeder Kettenradscheibe (50) gehalten sind, die erste Anordnung Kettenradscheiben (30) zu der Mehrzahl von Kettenradscheiben (50) so angeordnet ist, dass die Ausnehmung (33) durch die erste Nut (52) gehalten ist und die Kerben (34) durch die zweite Nut (53) gehalten sind, so dass die Ausnehmung (33) mit dem ersten Sperrrad (21) in Kontakt kommt, die erste und die zweite Anordnung von Kettenradscheiben (30, 40) zueinander so angeordnet sind, dass der erhöhte Rand (42) durch den abgesetzten Kranz (32) gehalten ist, das zweite Sperrrad (43) und die zweiten Zähne (44) jeweils durch die Ausnehmung (33) und die Kerben (34) gehalten sind und die Schraube (60) mit dem Schraubenabschnitt (24) so verschraubt ist, dass der Satz Freilaufräder (80) fest gehalten ist.

## Revendications

1. Structure d'une roue libre et d'un moyeu comprenant :
un moyeu (20) comprenant un premier rochet (21) ayant une paire de premières dents (22), et un arbre central (23) ayant une section filetée (24) à sa région d'extrémité adjacente au premier rochet (21) ; et
un ensemble roue libre (80) comprenant un premier ensemble disque de plateau de pédalier (30), un second ensemble disque de plateau de pédalier (40), une pluralité de disques de plateau de pédalier (50), et une vis (60) ;
chaque disque de plateau de pédalier (50) comprenant un trou traversant (51), une première rainure (52) et une seconde rainure (53) disposées sur une périphérie interne de celui-ci, un premier pignon simple (54) disposé sur une périphérie externe de celui-ci ;
le premier ensemble disque de plateau de pédalier (30) comprend un côté interne définissant une ouverture (31) dans une position centrale de celui-ci, un bord en retrait (32) formé sur ledit côté interne, un renfoncement (33) et une paire d'encoches (34) agencés sur un côté arrière du bord en retrait (32), et un premier pignon double (35) fixé sur un côté externe de celui-ci ;
le second ensemble disque de plateau de pédalier (40) comprend un côté interne définissant une ouverture (41) disposée dans une position centrale de celui-ci, un second pignon simple (45) fixé sur un côté externe de celui-ci, un rebord surélevé (42) formé sur un côté avant du second pignon simple (45), un second rochet (43) et une paire de secondes dents (44), les deux étant agencés sur un côté avant du rebord surélevé (42) ;
dans laquelle, en assemblage, les premières dents (22) du premier rochet (21) sont retenues avec la seconde rainure (53) de chaque disque de plateau de pédalier (50), le premier ensemble disque de plateau de pédalier (30) est positionné par rapport à la pluralité de disques de plateau de pédalier (50) de telle sorte que le renfoncement (33) est retenu avec la première rainure (52), et les encoches (34) sont retenues avec la seconde rainure (53), de telle sorte que le renfoncement (33) est en contact avec le premier rochet (21), les premier et second ensembles disques de plateau de pédalier (30, 40) sont positionnés l'un par rapport à l'autre de telle sorte que le rebord surélevé (42) est retenu avec le bord en retrait (32), le second rochet (43) et les secondes dents (44) sont retenus dans le renfoncement (33) et les encoches (34) respectivement, et la vis (60) étant vissée dans la section filetée (24), de telle sorte que l'ensemble roue libre (80) est fermement retenu.
